# EUROPÄISCHE PATENTSCHRIFT

(11) **EP 1 118 408 B1**
(45) Veröffentlichungstag und Bekanntmachung des Hinweises auf die Patenterteilung: **22.09.2004**
(21) Anmeldenummer: 00124004.3
(22) Anmeldetag: 04.11.2000
(51) Int. Cl.: B23B 31/30

(54) **Spannzylinder für Spanneinrichtungen**
Clamping cylinder for clamping devices
Cylindre de serrage pour dispositif de serrage

(30) Priorität: 19.01.2000 DE 20000845 U
(43) Veröffentlichungstag der Anmeldung: 25.07.2001
(73) Patentinhaber: Röhm GmbH, 89567 Sontheim (DE)
(72) Erfinder: Taglang, Johann, 89441 Medlingen (DE)
(74) Vertreter: Hentrich, Swen Dipl.-Phys. Dr.

(56) Entgegenhaltungen:
- DE-A- 2 530 573
- US-A- 4 431 201

## Beschreibung

Die Erfindung betrifft einen Spannzylinder für Spanneinrichtungen, insbesondere für Taktfutter oder dergl., an Werkzeugmaschinen, mit einem axial unverschiebbaren, mit der rotierenden Arbeitsspindel der Werkzeugmaschine zu verbindenden Zylindergehäuse und einem in einer Kolbenkammer des Zylindergehäuses verstellbaren Zylinderkolben, der über eine Kolbenstange mit einer Spannstange der Spanneinrichtung verbindbar ist, mit einem axial verschiebbar und undrehbar mit der Kolbenstange verbundenen Schwenkteil, das in einer im Zylindergehäuse ausgebildeten Schwenkteilkammer druckmittelbetätigt verschwenkbar ist, sowie mit einem Verteiler, der aus einem feststehenden, die Druckmittelanschlüsse aufweisenden Verteilergehäuse und einer mit dem Zylindergehäuse umlaufenden, die Druckmittelleitungen aufweisenden Verteilerwelle besteht.

Derartige Spannzylinder sind aus der Praxis bekannt, die dazu genutzt werden, um über die Kolbenstange die Spannstange im Futterkörper zu verdrehen und so das Taktfutter zu schalten. Zur Verdrehung der Kolbenstange ist an dieser ein radial abstehender Flansch, eben das Schwenkteil, vorgesehen, daß zu einer Unwucht des sich mit der Arbeitsspindel der Werkzeugmaschine mitdrehenden Zylindergehäuses führt. Es ist bereits versucht worden, diese Unwucht durch Auswuchten des Spannzylinders zu beseitigen, jedoch hat dies zu einem unbefriedigenden Ergebnis geführt, so daß die maximal erreichbare Drehzahl von derartigen Spannzylindern gegenüber Spannzylinder, die kein Schwenkteil aufweisen, deutlich reduziert und auf ca. 2000 Umdrehungen pro Minute limitiert ist.

Der Erfindung liegt daher die Aufgabe zugrunde, einen Spannzylinder der eingangs genannten Art so auszubilden, daß die maximal erreichbare Drehzahl deutlich erhöht werden kann.

Diese Aufgabe wird nach der Erfindung bei einem Spannzylinder der eingangs genannten Art dadurch gelöst, daß zur Auswuchtung ein das Schwenkteil in axialer Richtung einrahmendes Wuchtgewichtepaar vorgesehen ist.

Die Erfindung bietet den Vorteil, daß das Auswuchten des Spannzylinders in zwei beidseits des Schwenkteiles angeordneten Ebenen erfolgt und so die durch das Schwenkteil gegebene asymmetrische Massenverteilung im Zylindergehäuse besser kompensiert werden kann, und zwar sowohl in radialer, als auch in axialer Richtung. Damit ist eine nach DIN ISO 1940 bestimmte Auswuchtgüte von G=6.3 und besser erreichbar, die dazu führt, daß die maximale Drehzahl auf 4000 Umdrehungen pro Minute erhöht und damit verdoppelt werden kann.

Im Rahmen der Erfindung ist weiterhin vorgesehen, daß das Wuchtgewichtepaar durch zwei undrehbar und axial verschiebbar mit der Kolbenstange verbundene Wuchtgewichte gebildet ist. Da auch das Schwenkteil undrehbar mit der Kolbenstange verbunden ist, ist durch die undrehbare Verbindung der Wuchtgewichte mit der Kolbenstange sichergestellt, daß bei dem Verschwenken des Schwenkteils die relative Lage der Wuchtgewichte gegenüber dem Schwenkteil unverändert bleibt, und damit die Auswuchtgüte nicht von dem Schaltzustand des Spannzylinders beeinflußt wird. Die axiale Verschiebbarkeit der Wuchtgewichte gegenüber der Kolbenstange dient dazu, daß gleichfalls die relative Anordnung unverändert bleibt, wenn bei der Betätigung des Spannzylinders zum Spannen bzw. Entspannen der Spanneinrichtung die Kolbenstange in axialer Richtung verschoben wird.

Da somit die axiale Lage der Wuchtgewichte unverändert bleibt, ist es möglich, daß die Wuchtgewichte in zwei im Zylindergehäuse beidseits der Schwenkteilkammer ausgebildeten Kammern angeordnet sind.

Weiterhin ist eine besonders bevorzugte Ausführungsform der Erfindung dadurch gekennzeichnet, daß das Zylindergehäuse aus mehreren lösbar verbundenen, in axialer Richtung aufeinanderfolgenden Teilen besteht, und daß die radial verlaufenden Wände der Kammern und/oder der Schwenkkammer durch axial benachbarte Teile gebildet sind. Dies bietet den Vorteil, daß die Kammern sowie die Schwenkkammer und damit auch die in diesen Kammern bzw. in der Schwenkkammer angeordneten Wuchtgewichte und das Schwenkteil leicht zugänglich sind, wodurch der Auswuchtvorgang selber stark erleichtert und die Montage vereinfacht wird.

Um innerhalb der Kammern eine günstigere Massenverteilung zu erreichen, sind die Kammern mit einem Öl gefüllt.

Die Wuchtgewichte weisen einen radial nach außen zum Rand der Kammer weisenden Ausleger auf, wobei in dem Ausleger tangential zur Kolbenstange verlaufende Kanäle ausgebildet sind. Diese Kanäle können dazu genutzt werden, die Massenverteilung der Wuchtgewichte zu modifizieren und so deren Trägheitsmomente zu beeinflussen.

Die undrehbare und axial verschiebbare Verbindung der Wuchtgewichte mit der Kolbenstange ist dadurch erreicht, daß die Wuchtgewichte durch einen in einer axial verlaufenden Aufnahme geführten Stift drehfest mit der Kolbenstange verbunden sind.

Eine besonders hohe Auswuchtgüte läßt sich erreichen, wenn die beiden Wuchtgewichte sowie das Schwenkteil nicht gleichmäßig um den Umfang der Kolbenstange verteilt angeordnet sind, sondern wenn beide Wuchtgewichte um 180° gegenüber dem Schwenkteil versetzt an der Kolbenstange befestigt sind.

Im folgenden wird die Erfindung an einem in der Zeichnung dargestellten Ausführungsbeispiel näher erläutert; es zeigen:
- Fig. 1: einen Axialschnitt durch einen erfindungsgemäßen Spannzylinder,
- Fig. 1a: die Fortsetzung des Axialschnittes aus Fig. 1 in axialer Richtung hinter der Bruchlinie,

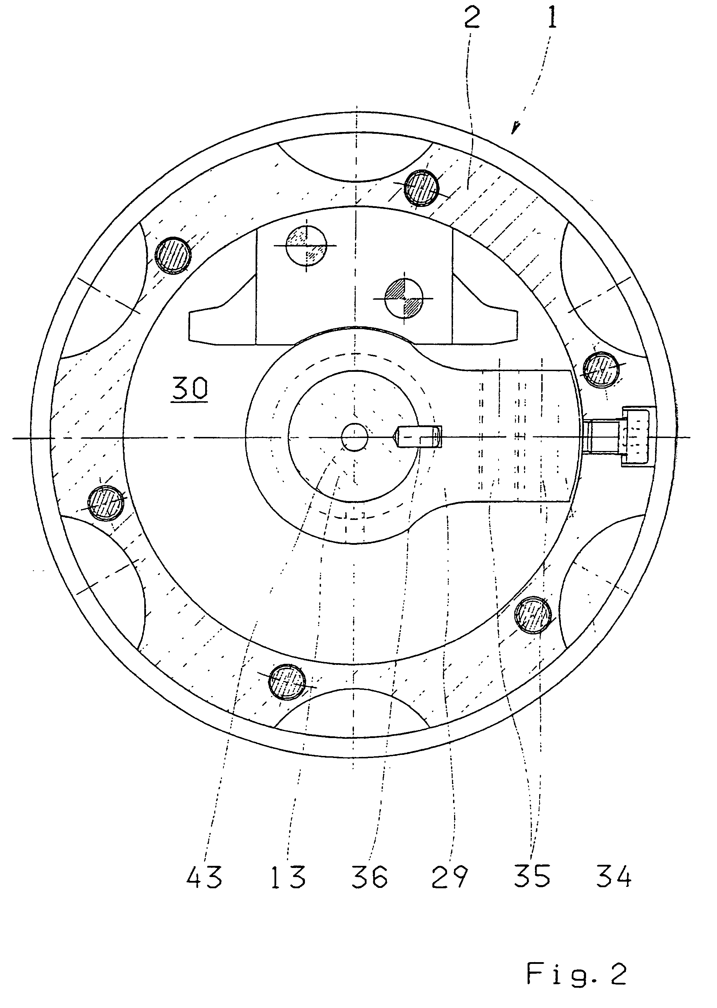

- Fig. 2: den Schnitt II-II aus Fig. 1,
- Fig. 3: den Schnitt III-III aus Fig. 1,

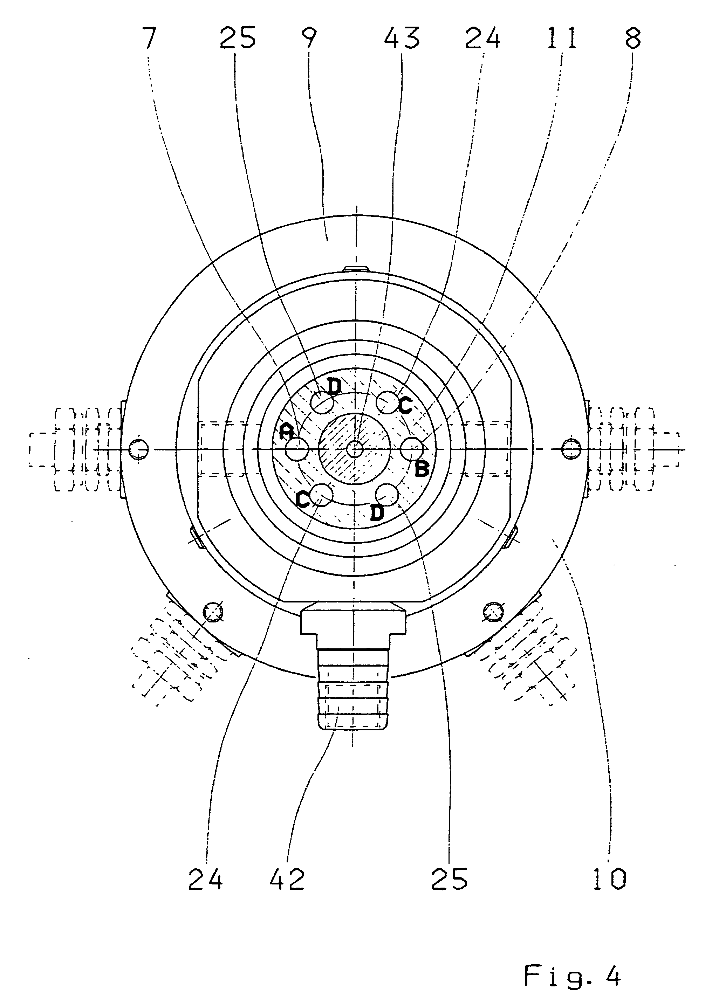

- Fig. 4: den Schnitt IV-IV aus Fig. 1, und

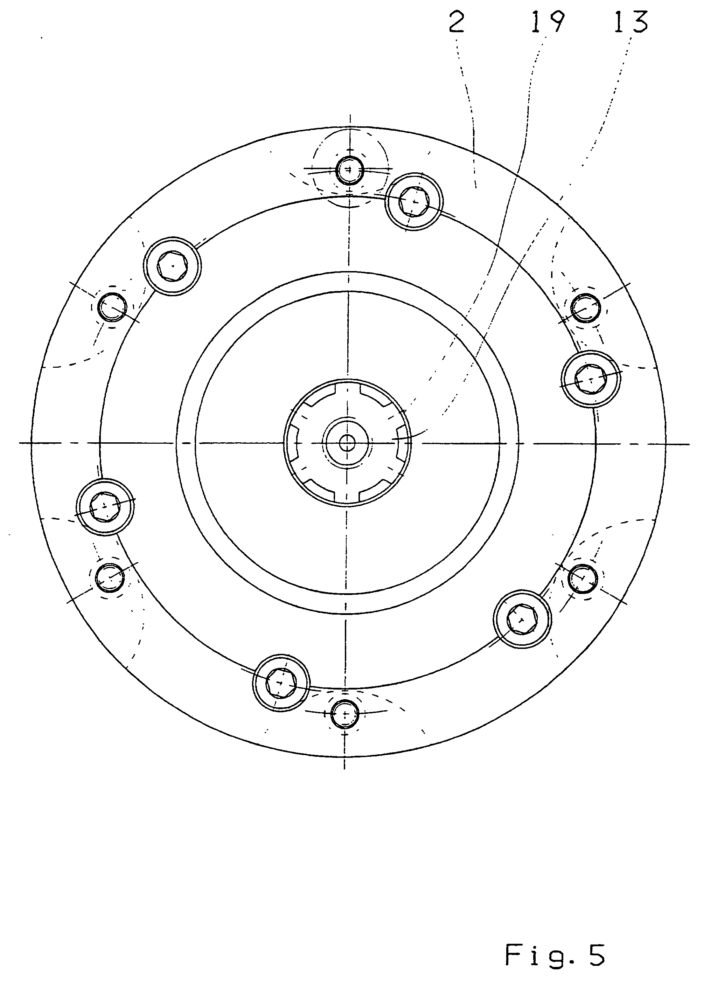

- Fig. 5: eine Stirnansicht des Spannzylinders mit dem Ende des Zylindergehäuses, an dem die Arbeitsspindel anschließbar ist.

Der zur Verwendung an einer Werkzeugmaschine vorgesehene Spannzylinder 1 besteht aus einem Zylindergehäuse 2, das drehfest mit der nicht in der Zeichnung dargestellten Arbeitsspindel der Werkzeugmaschine verbunden wird und daher mit dieser zusammen umläuft. In dem Zylindergehäuse 2 ist in einer Kolbenkammer 3 ein Zylinderkolben 4 angeordnet, der druckmittelbetätigt axial verstellbar ist. Dazu wird das Druckmittel über die beiden Druckmittelanschlüsse 5,6 und die Druckmittelleitungen 7,8 in die Kolbenkammer 3 geleitet. Die Druckmittelanschlüsse 5,6 sind an einem Verteiler 9 angeordnet, der aus einem Verteilergehäuse 10 und einer Verteilerwelle 11 besteht, wobei in der Verteilerwelle 11 die Druckmittelleitungen 7,8 verlaufen. Bei dem in der Zeichnung dargestellten Ausführungsbeispiel ist die Verteilerwelle 11 einstückig mit dem Zylindergehäuse 2 verbunden und läuft daher mit diesem gemeinsam um. Das Verteilergehäuse 10 nimmt an dieser Drehung nicht teil und ist mittels Drehlager 12 auf der Verteilerwelle 11 gelagert. Zwischen der Verteilerwelle 11 und dem Verteilergehäuse 10 durchtretendes Lecköl wird durch den Anschluß 42 abgeleitet.

Die axiale Verstellung des Zylinderkolbens 4 bewirkt auch die axiale Verstellung einer mit diesem verbundenen Kolbenstange 13, die an dem in der Zeichnung linken Ende über einen Ringbund 14 mit Endschalter 15,16,17 zusammenwirkt, die über Ausleger 18 an dem Verteilergehäuse 10 angeschlossen sind und sich somit nicht in axialer Richtung verstellen. Damit kann über die Endschalter 15,16,17 die axiale Lage der Kolbenstange 13 und damit auch der Spannstange der an der Werkzeugmaschine befestigten Spanneinrichtung erfaßt werden, die für das Zusammenwirken mit dem Spannzylinder 1 durch ein Taktfutter erforderlich ist. Ist der Endschalter 15 durch den Ringbund 14 bedämpft, befindet sich der Spannzylinder 1 im offenen Zustand; bei Bedämpfung der Endschalter 16 bzw. 17 ist der Spannzylinder 1 gespannt bzw. voll durchgespannt. In der Kolbenstange 13 ist ein Durchgang 43 ausgebildet, der auch als Druckmittelleitung genutzt werden kann.

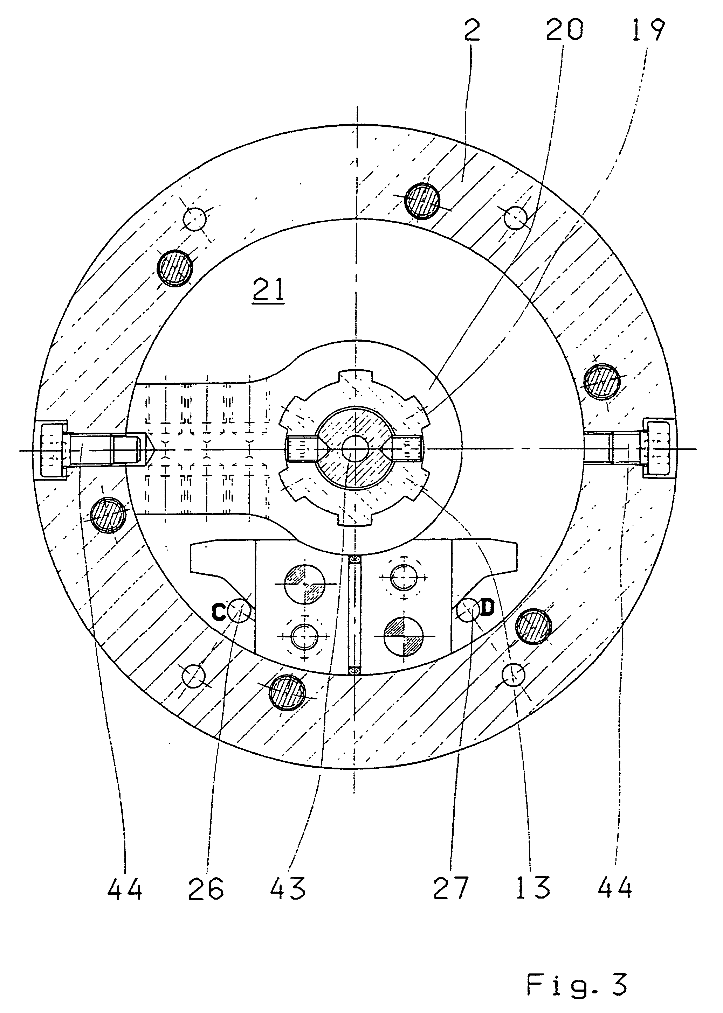

An der ein Keilnabenprofil 19 aufweisenden Kolbenstange 13 ist undrehbar und axial verschiebbar ein Schwenkteil 20 gelagert, das in einer in dem Zylindergehäuse 2 ausgebildeten Schwenkteilkammer 21 angeordnet ist. In dieser Schwenkteilkammer 21 kann das Schwenkteil 20 druckmittelbetätigt verschwenkt werden, wobei diese Drehung infolge der undrehbaren Verbindung mit der Kolbenstange 13 auch von der Kolbenstange 13 selber ausgeführt wird. Die Zuleitung des Druckmittels in die Schwenkteilkammer 21 erfolgt über die gleichfalls am Verteilergehäuse 10 angeordneten Druckmittelanschlüsse 22 und 23, die über gleichfalls in der Verteilerwelle 11 und in dem Zylindergehäuse 2 verlaufende Druckmittelleitungen 24,25 mit der Schwenkteilkammer 21 verbunden sind. In Fig. 3 ist die Mündung der mit dem Druckmittelanschluß 22 verbundenen Druckmittelleitung 24 mit 26, die Mündung der mit dem Druckmittelanschluß 23 verbundenen Druckmittelleitung 25 mit 27 bezeichnet. Die Schwenkstellung des Schwenkteils 20 ist durch eine Zapfenschraube 44 fixierbar.

Durch das Schwenkteil 20 ist eine Unwucht des Spannzylinders 1 gegeben, die dadurch kompensiert wird, daß zur Auswuchtung ein das Schwenkteil 20 in axialer Richtung einrahmendes Wuchtgewichtepaar 28 vorgesehen ist. Das Wuchtgewichtepaar 28 ist durch zwei undrehbar und axial verschiebbar mit der Kolbenstange 13 verbundene Wuchtgewichte 29 gebildet, die in zwei im Zylindergehäuse 2 beidseits der Schwenkteilkammer 21 ausgebildeten, mit Öl gefüllten Kammern 30 angeordnet sind, und zwar mit einer gegenüber dem Schwenkteil 20 um 180° versetzten Orientierung. Das Zylindergehäuse 2 ist mehrteilig gestaltet mit in axialer Richtung aufeinanderfolgen Teilen 31,32,33, die lösbar miteinander verbunden sind, wobei die radial verlaufenden Wände der Kammern 30 sowie der Schwenkkammer 21 durch axial benachbarte Teile 31,32,33 gebildet sind, so daß sowohl die Kammern 30 als auch die Schwenkkammer 21 durch Entfernen des entsprechenden Teiles 31,32,33 von dem Zylindergehäuse 2 leicht zugänglich sind.

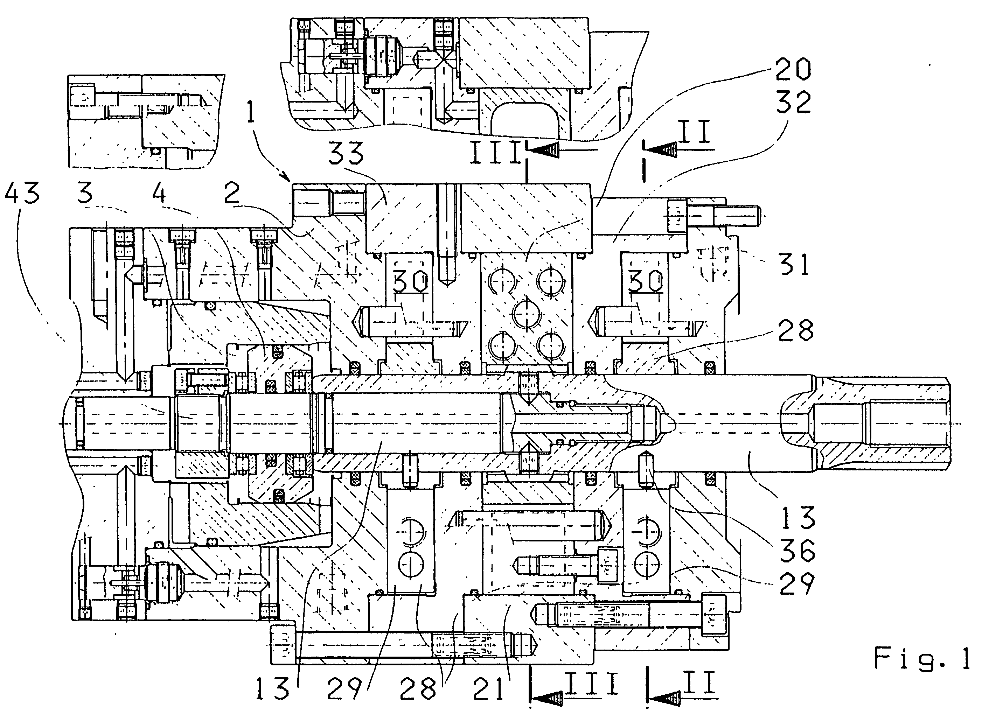

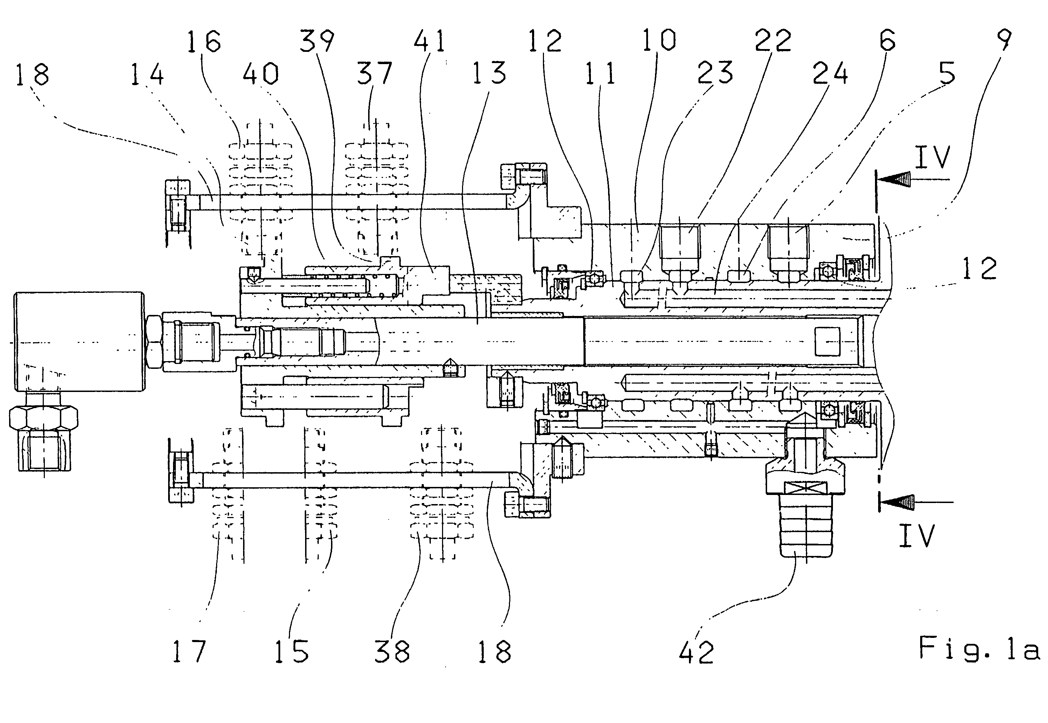

Die Wuchtgewichte 29 weisen einen radial nach außen zum Rand der Kammer 30 weisenden Ausleger 34 auf, in dem tangential zur Kolbenstange 13 verlaufende Kanäle 35 ausgebildet sind. Weiterhin sind die Wuchtgewichte 29 durch einen in einer axial verlaufenden Aufnahme geführten Stift 36 drehfest mit der Kolbenstange 13 verbunden, so daß die Kolbenstange 13 die durch den Zylinderkolben 4 bewirkte axiale Verschiebung ausführen kann, ohne die Wuchtgewichte 29 mitzunehmen. Wird hingegen die Kolbenstange 13 durch das Schwenkteil 20 verdreht, verdrehen sich auch die Wuchtgewichte 29 mit der Kolbenstange 13, so daß die relative Anordnung von dem Schwenkteil 20 und den Wuchtgewichten 29 erhalten bleibt. Die Drehlage der Kolbenstange 13 wird gleichfalls durch Endschalter 37 und 38 überwacht, die mit einem zweiten Ringbund 39 zusammenwirken, der an einer gegen die Kraft einer Feder 40 gegenüber der Kolbenstange 13 verschiebbaren Hülse 41 ausgebildet ist. Diese Hülse 41 ist in der einen Schwenkstellung der Kolbenstange 13 an der Verteilerwelle 11 und damit an dem Zylindergehäuse 2 abgestützt, so daß die Hülse 41 die in der Fig. 1 dargestellte axiale Lage einnimmt und den Endschalter 37 bedämpft. Wird das Schwenkteil 20 mit der Kolbenstange 13 um 180° verdreht, verliert die Hülse 41 ihre Abstützung und verstellt sich durch die Kraft der Feder 40 in axialer Richtung, wodurch nunmehr der Endschalter 38 bedämpft wird.

## Patentansprüche

1. Spannzylinder für Spanneinrichtungen, insbesondere für Taktfutter oder dergl., an Werkzeugmaschinen, mit einem axial unverschiebbaren, mit der rotierenden Arbeitsspindel der Werkzeugmaschine zu verbindenden Zylindergehäuse (2) und einem in einer Kolbenkammer (3) des Zylindergehäuses (2) verstellbaren Zylinderkolben (4), der über eine Kolbenstange (13) mit einer Spannstange der Spanneinrichtung verbindbar ist, mit einem axial verschiebbar und undrehbar mit der Kolbenstange (13) verbundenen Schwenkteil (20), das in einer im Zylindergehäuse (2) ausgebildeten Schwenkteilkammer (21) druckmittelbetätigt verschwenkbar ist, sowie mit einem Verteiler (9), der aus einem feststehenden, die Druckmittelanschlüsse (5,6,22,23) aufweisenden Verteilergehäuse (10) und einer mit dem Zylindergehäuse (2) umlaufenden, die Druckmittelleitungen (7,8,24,25) aufweisenden Verteilerwelle (11) besteht, **dadurch gekennzeichnet, daß** zur Auswuchtung ein das Schwenkteil (20) in axialer Richtung einrahmendes Wuchtgewichtepaar (28) vorgesehen ist.

2. Spannzylinder nach Anspruch 1, **dadurch gekennzeichnet, daß** das Wuchtgewichtepaar (28) durch zwei undrehbar und axial verschiebbar mit der Kolbenstange (13) verbundene Wuchtgewichte (29) gebildet ist.

3. Spannzylinder nach Anspruch 2, **dadurch gekennzeichnet, daß** die Wuchtgewichte (29) in zwei im Zylindergehäuse (2) beidseits der Schwenkteilkammer (21) ausgebildeten Kammern (30) angeordnet sind.

4. Spannzylinder nach Anspruch 3, **dadurch gekennzeichnet, daß** das Zylindergehäuse (2) aus mehreren lösbar verbundenen, in axialer Richtung aufeinanderfolgenden Teilen (31,32,33) besteht, und daß die radial verlaufenden Wände der Kammern (30) und/oder der Schwenkkammer (21) durch axial benachbarte Teile (31,32,33) gebildet sind.

5. Spannzylinder nach Anspruch 3 oder 4, **dadurch gekennzeichnet, daß** die Kammern (30) mit einem Öl gefüllt sind.

6. Spannzylinder nach einem der Ansprüche 2 bis 5, **dadurch gekennzeichnet, daß** die Wuchtgewichte (29) einen radial nach außen zum Rand der Kammer (30) weisenden Ausleger (34) aufweisen.

7. Spannzylinder nach Anspruch 6, **dadurch gekennzeichnet, daß** in dem Ausleger (34) tangential zur Kolbenstange (13) verlaufende Kanäle (35) ausgebildet sind.

8. Spannzylinder nach einem der Ansprüche 2 bis 7, **dadurch gekennzeichnet, daß** die Wuchtgewichte (29) durch einen in einer axial verlaufenden Aufnahme geführten Stift (36) drehfest mit der Kolbenstange (13) verbunden sind.

9. Spannzylinder nach einem der Ansprüche 2 bis 8, **dadurch gekennzeichnet, daß** beide Wuchtgewichte (29) um 180° gegenüber dem Schwenkteil (20) versetzt an der Kolbenstange (13) befestigt sind.

## Claims

1. A clamping cylinder for clamping devices, in particular for pivot chucks or the like, on machine tools, comprising an axially immovable cylinder housing (2) to be connected to the rotating working spindle of the machine tool and a cylinder piston (4) which is displaceable in a piston chamber (3) of the cylinder housing (2) and which can be connected by way of a piston rod (13) to a clamping rod of the clamping device, a pivot portion (20) which is connected axially movably and non-rotatably to the piston rod (13) and which is pivotable by pressure fluid-actuation in a pivot portion chamber (21) provided in the cylinder housing (2), and a distributor (9) comprising a stationary distributor housing (10) having pressure fluid connections (5, 6, 22, 23) and a distributor shaft (11) which rotates with the cylinder housing (2) and which has the pressure fluid conduits (7, 8, 24, 25), **characterised in that** for balancing purposes there is provided a pair (28) of balancing weights flanking the pivot portion (20) in the axial direction.

2. A clamping cylinder according to claim 1 **characterised in that** the pair (28) of balancing weights is formed by two balancing weights (29) connected non-rotatably and axially displaceably to the piston rod (13).

3. A clamping cylinder according to claim 2 **characterised in that** the balancing weights (29) are arranged in two chambers (30) provided in the cylinder housing (2) on both sides of the pivot portion chamber (21).

4. A clamping cylinder according to claim 3 **characterised in that** the cylinder housing (2) comprises a plurality of releasably connected portions (31, 32, 33) which are arranged in succession in the axial direction and that the radially extending walls of the chambers (30) and/or the pivot chamber (21) are formed by axially adjacent portions (31, 32, 33).

5. A clamping cylinder according to claim 3 or claim 4 **characterised in that** the chambers (30) are filled with an oil.

6. A clamping cylinder according to one of claims 2 to 5 **characterised in that** the balancing weights (29) have a cantilever arm (34) facing radially outwardly towards the edge of the chamber (30).

7. A clamping cylinder according to claim 6 **characterised in that** provided in the cantilever arm (34) are passages (35) extending tangentially with respect to the piston rod (13).

8. A clamping cylinder according to one of claims 2 to 7 **characterised in that** the balancing weights (29) are non-rotatably connected to the piston rod (13) by a pin (36) guided in an axially extending receiving means.

9. A clamping cylinder according to one of claims 2 to 8 **characterised in that** both balancing weights (19) are fixed to the piston rod (13) displaced through 180° respect to the pivot portion (20).

## Revendications

1. Vérin de serrage pour dispositifs de serrage, en particulier pour mandrins à cycle de travail ou similaires, sur des machines-outils, avec un corps de vérin (2) fixe dans la direction axiale à relier à la broche de travail tournante de la machine-outil, avec un piston de vérin (4) déplaçable dans une chambre à piston (3) du corps de vérin (2), qui est lié à une tige de serrage du dispositif de serrage par l'intermédiaire d'une tige de piston (13), avec un élément oscillant (20) qui coulisse dans la direction axiale, est lié de manière fixe en rotation à la tige de piston (13) et peut osciller dans une chambre d'élément oscillant (21) sous l'action d'une pression de fluide de commande, ainsi qu'avec un distributeur (9) qui est formé d'un corps de distributeur (10) portant les raccords à fluide de pression (5, 6, 22, 23) et un arbre de distributeur (11) qui tourne avec le corps de vérin (2) et porte les conduites à fluide de pression (7, 8, 24, 25), **caractérisé par le fait qu'**il est prévu pour l'équilibrage une paire de poids d'équilibrage (28) qui encadrent l'élément oscillant (20) dans la direction axiale.

2. Vérin de serrage selon la revendication 1, **caractérisé par le fait que** la paire de poids d'équilibrage (28) est formée de deux poids d'équilibrage (29) qui sont liés de manière fixe en rotation, mais avec possibilité de coulissement dans la direction axiale, à la tige de piston (13)..

3. Vérin de serrage selon la revendication 2, **caractérisé par le fait que** les poids d'équilibrage (29) sont disposés dans deux chambres (30) aménagées dans le corps de vérin (2), de part et d'autre de la chambre d'élément oscillant (21).

4. Vérin de serrage selon la revendication 3, **caractérisé par le fait que** le corps de vérin (2) est formé de plusieurs éléments (31, 32, 33) disposés les uns à la suite des autres dans la direction axiale et liés entre eux de manière séparable et **par le fait que** les parois radiales des chambres (30) et/ou de la chambre d'élément oscillant (21) sont formées par des éléments (31, 32, 33) voisins dans la direction axiale.

5. Vérin de serrage selon la revendication 3 ou 4, **caractérisé par le fait que** les chambres (30) sont remplies d'huile.

6. Vérin de serrage selon une des revendications 2 à 5, **caractérisé par le fait que** les poids d'équilibrage (29) présentent un bras (34) qui s'étend radialement vers l'extérieur en direction du bord de la chambre (30).

7. Vérin de serrage selon la revendication 6, **caractérisé par le fait que** des canaux (35) qui s'étendent tangentiellement à la tige de piston (13) sont aménagés dans le bras (34).

8. Vérin de serrage selon une des revendications 2 à 7, **caractérisé par le fait que** les poids d'équilibrage (29) sont liés de manière fixe en rotation à la tige de piston (13) par une goupille (36) guidée dans un logement qui s'étend dans la direction axiale.

9. Vérin de serrage selon une des revendications 2 à 8, **caractérisé par le fait que** les deux poids d'équilibrage (29) sont fixés à la tige de piston (13) en étant décalés de 180° par rapport à l'élément oscillant (20).
